# EUROPÄISCHE PATENTSCHRIFT

(11) **EP 1 856 497 B1**
(45) Veröffentlichungstag und Bekanntmachung des Hinweises auf die Patenterteilung: **20.08.2014**
(21) Anmeldenummer: 06705351.2
(22) Anmeldetag: 22.02.2006
(51) Int. Cl.: G01L 1/16, G01L 9/00, H01L 41/113, G01L 23/10, G01L 23/22, F23Q 7/00

(54) **BAUTEIL FÜR PIEZOELEKTRISCHE KRAFT- ODER DRUCKSENSOREN, ZUSAMMENGEHALTEN VON ELEKTRISCH ISOLIERENDEM FILM**
COMPONENT FOR PIEZOELECTRIC FORCE OR PRESSURE SENSORS, HELD TOGETHER BY AN ELECTRICALLY INSULATING FILM
COMPOSANT POUR CAPTEURS DE FORCE OU DE PRESSION, DONT LES ELEMENTS SONT MAINTENUS LES UNS AVEC LES AUTRES PAR UN FILM ELECTRO-ISOLANT

(30) Priorität: 24.02.2005 CH 335052005
(43) Veröffentlichungstag der Anmeldung: 21.11.2007
(73) Patentinhaber: Kistler Holding AG, 8408 Winterthur (CH); ROBERT BOSCH GMBH, 70442 Stuttgart (DE)
(72) Erfinder: WOLFER, Peter, CH-8451 Kleinandelfingen (CH); BERTOLA, Andrea, CH-8047 Zürich (CH); MÜLLER, Michael, CH-8544 Rickenbach-Attikon (CH); HESS, Reinhold, CH-8405 Winterthur (CH); CAVALLONI, Claudio, CH-8105 Regensdorf (CH); SCHOTT, Steffen, 71701 Schwieberdingen (DE); SALTIKOV, Pavlo, 71334 Waiblingen (DE); ZACH, Reiko, 71686 Remseck (DE); KLEINDL, Michael, 71701 Schwieberdingen (DE); KERN, Christoph, 71546 Aspach (DE)
(74) Vertreter: Zwick, Evelyn
(86) Internationale Anmeldenummer: PCT/CH2006/000111
(87) Internationale Veröffentlichungsnummer: WO 2006/089446

(56) Entgegenhaltungen:
- EP-A- 1 111 360
- EP-A- 1 460 403
- DE-C2- 19 680 912
- US-A- 4 566 316
- US-A- 4 577 510

## Beschreibung

### Technisches Gebiet

Die Erfindung betrifft ein Bauteil zum Einbau in Kraft- oder Drucksensoren umfassend ein Messelement aus piezoelektrischem Material gemäss dem Oberbegriff des Hauptanspruchs.

### Stand der Technik

Sensoren umfassend solche Bauteile werden beispielsweise zum Messen in Brennräumen, beispielsweise in Glühkerzen verwendet.

Aus der DE 196 80 912 C2 ist eine Glühkerze mit eingebautem Drucksensor bekannt, bei dem ein Sensor von einem Heizabschnitt mit dem Zylinderdruck eines Dieselmotors beaufschlagbar ist, wobei der Sensor von einem Fixierglied rückseitig arretiert ist.

Aus der DE 10205819 ist eine weitere Anordnung für dieselbe Anwendung bekannt, bei der ein piezokeramisches Element zwischen zwei Elektroden mit Kontaktstellen angeordnet ist.

Die DE 10218544 A1 beschreibt ebenfalls eine Glühkerze mit einem eingebauten Drucksensor mit ähnlicher Bauweise.

In der US 4,577,510 wird ein Drucksensor angegeben, der vier Schichten von PVC Folien umfasst, die mittels Epoxidharz zusammenlaminiert sind. Die inneren beiden Folien enthalten aktive Bereiche, welche mit Elektroden aus Aluminium versehen wurden. Die äusseren Schlichten schützen diese aktiven Bereiche.

Alle diese Anordnungen lassen sich nur aufwändig zusammenbauen und eignen sich daher nicht zur Serienfertigung.

Üblicherweise werden Sensoren von einem Hersteller gebaut, der die erforderlichen Komponenten in fachmännischer Weise und unter Wahrung der notwendigen Sorgfalt vorfabriziert und zusammensetzt. Werden einzelne Komponenten aber an einen anderen Hersteller geliefert, der die Endmontage in den Sensor, beispielsweise in eine Glühkerze, vornimmt, stellen sich andere Anforderungen. Zum einen müssen die Komponenten transportiert werden und dürfen beim Transport keinen Schaden erhalten. Zum Anderen soll der Einbau in den Sensor erleichtert werden um das Risiko von Fehlern durch mangelnde Sorgfalt zu minimieren. Zudem werden vermehrt grosse Stückzahlen gefordert, was eine Serienfertigung, also einen automatisierten Zusammenbau, bedingt.

### Darstellung der Erfindung

Aufgabe der vorliegenden Erfindung ist es, ein Kraft- oder Druckmesselement als Bauteil eingangs erwähnter Art anzugeben, welches sich zum serienmässigen Einbau in Sensoren eignet. Eine bevorzugte Anwendung ist die Verwendung in Glühkerzen. Dazu sind hohe Anforderungen an die einfache, automatische Herstellbarkeit sowie an die Herstellkosten gestellt. Zudem soll das Bauteil den Anforderungen beim Transport und beim Handling bis zum Einbau in den Sensor oder in die Glühkerze genügen. Insbesondere dürfen sich die einzelnen Komponenten des Bauteil beim Transport nicht zueinander verschieben können.

Die Aufgabe wird gelöst durch die Merkmale des unabhängigen Patentanspruchs.

Die erforderlichen Komponenten eines Bauteiles für Kraft-oder Druckmessungen, beispielsweise durch Einbau in eine Glühkerze, umfassen ein Messelement aus piezoelektrischem Material umgeben von zwei Elektroden, welche ihrerseits wiederum von zwei Übertragungskörpern umgeben sind. All diese Komponenten sind in der erfindungsgemässen Ausgestaltung scheibenförmig, lochscheibenförmig oder zylindrisch und lassen sich aneinander reihen. Der erfinderische Gedanke an dieser Erfindung besteht nun darin, diese Komponenten in der aneinandergereihten, zentrierten Anordnung mit einem dünnen, isolierenden Film zu einem Bauteil zusammenzuhalten. Dieser Film kann, beispielsweise durch einen Schrumpfschlauch oder durch eine Lackierung, sehr einfach maschinell angebracht werden und erfüllt zudem den Zweck, die Zentrierung aller Komponenten des erfindungsgemässen Bauteiles zu wahren. Dies erübrigt hohe Anforderungen an die anderen Bauteile des Sensors oder der Glühkerze, welche das Bauteil im eingebauten Zustand umgeben.

### Kurze Beschreibung der Zeichnungen

Im Folgenden wird die Erfindung unter Beizug der Zeichnungen, näher erklärt. Es zeigen
- Fig. 1: eine schematische Darstellung einer bevorzugten Anordnung in einer Glühkerze, im Querschnitt;
- Fig. 2: eine schematische Darstellung eines Ausschnitts einer bevorzugten Glühkerze im Querschnitt, im Bereich des erfindungsgemässen Bauteiles.
- Fig. 3: eine perspektivische Ansicht eines erfindungsgemässen Bauelements

### Wege zur Ausführung der Erfindung

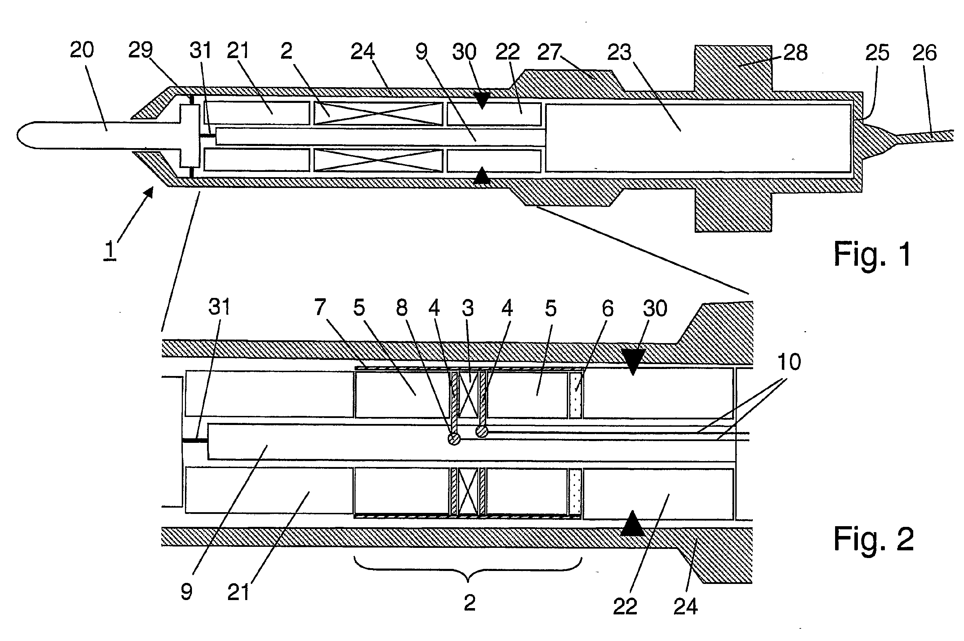

Die Fig. 1 zeigt ein mögliches Ausführungsbeispiel als Anwendung des erfindungsgemässen Bauteils 2 in einer Glühkerze 1. Die Figur zeigt in einem Querschnitt eine schematische Darstellung einer bevorzugten Glühkerze 1. Diese umfasst ein Gehäuse 24, in dessen vorderem Bereich ein Glühstift 20 eingesetzt ist, der aus diesem herausragt. Anschliessend hinter dem Glühstift 20 kann sich eine Kraftübertragungshülse 21 befinden, hinter welcher das erfindungsgemässe Bauteil 2 angeordnet ist. Alternativ dazu kann das Bauteil 2 auch direkt hinter dem Glühstift angeordnet sein. Hinter diesem Bauteil 2 befindet sich eine Fixierung 22, welche rückseitig an einem Verbindungselement 23 anliegt. Das Verbindungselement 23 ist an seinem hinteren Ende an einem Absatz 25 des Gehäuses 24 angebracht. Alternative Konstruktionen mit denselben Wirkungen sind ebenfalls möglich. Insbesondere kann die Fixierung 22 am Gehäuse 24 an einer Schweissstelle 30 angeschweisst sein, wodurch keine Kraft mehr über das Verbindungselement 23 auf den Absatz 25 des Gehäuses 24 übertragen wird.

Zur Anbringung der Glühkerze 1 in einer dafür vorgesehenen Bohrung eines Zylinderkopfes verfügt das Gehäuse 24 in der Regel über ein Gewinde 27 und über einen Sechskant 28 als Angriffsfläche für ein Werkzeug. Die Schweissstelle 30 ist in diesem Fall im Bereich zwischen dem Gewinde 27 und dem Glühstift 20 angeordnet. Um fehlerhafte Auswirkungen durch das Verspannen der Glühkerze 1 beim Einbau auf eine Messung zu vermeiden, kann die Schweissstelle 30 vorzugsweise anstatt am Gehäuse 24 an einer nicht dargestellten Zwischenhülse angebracht sein, welche vom Gehäuse 24 getrennt ist.

Im hintersten Bereich der Glühkerze 1 befindet sich der Ausgang für die Verkabelung 26, der auch Leitungen für das Bauteil 2 umfasst. Im vorderen Bereich der Glühkerze 1 befindet sich eine Membran 29, welche das Innere des Gehäuses 24 vom Brennraum abdichtet. Mittels dieser Membran 29 kann auch eine gewünschte Vorspannung auf das Bauteil 2 gebracht werden.

Ein Druck im Brennraum wird über den Glühstift 20 und, wenn vorhanden, über die Kraftübertragungshülse 21 auf das Bauteil 2 übertragen, welches sich am Gehäuse 24 über die Fixierung 22 abstützt. Kraftübertragungshülse 21, Bauteil 2 und Verbindungselement 23 werden in diesem Ausführungsbeispiel durch einen Stift 9 getragen, der mittig durch diese Elemente verläuft. Dieser Stift 9 hat keinen Einfluss auf die Kraftübertragung. Der Stift 9 umfasst einen Glühstromdraht 31 zum Heizen des Glühstiftes 20 oder nimmt diese mittig auf. Vorzugsweise ist mindestens ein Teil der Kraftübertragungshülse 21 aus wärmeisolierendem Material, sodass das Bauteil 2 weniger der Wärmebelastung aus dem Brennraum ausgesetzt ist.

Fig. 2 zeigt einen detaillierten Ausschnitt der Fig. 1 im Bereich des Bauteiles 2. Das Bauteil 2 umfasst verschiedene Komponenten, welche in diesem Ausführungsbeispiel scheibenförmig, lochscheibenförmig oder zylindrisch sind. Vorzugsweise weisen diese im Wesentlichen dieselben äusseren Durchmesser auf. Ein Messelement 3 bildet das Kernstück des Bauteiles 2. Dieses besteht aus piezoelektrischem Material, beispielsweise aus piezoelektrischem Kristall oder aus piezoelektrischer Keramik. Dieses Messelement 3 ist beidseitig umgeben von je einer Elektrode 4, welche wiederum von je einem Übertragungskörper 5 umgeben ist. Alternativ dazu kann jede Elektrode 4 auch mit ihrem benachbarten Übertragungskörper 5 einteilig ausgestaltet sein. Die Elektroden dienen dazu, die bei Druck- oder Krafteinwirkung auftretenden Ladungen beidseitig des Messelementes 3 zu sammeln und an die dafür vorgesehenen Kontaktstellen 8 weiter zu leiten. Diese Kontaktstellen 8 befinden sich vorzugsweise auf der Innenseite oder in der Mitte der Elektroden. Dies ist von Vorteil, da in der Regel auf der Aussenseite kaum Platz zwischen dem Bauteil 2 und dem Gehäuse 24 für das Wegführen der Leitungen vorhanden ist.

Die Übertragungskörper 5 erfüllen verschiedene Funktionen. Mindestens einer der Übertragungskörper 5 ist vorzugsweise ein Expansionskörper, der die thermische Ausdehnungen des Gehäuse 24 kompensiert. Der andere Übertragungskörper 5 kann ein Expansionskörper, ein elektrischer Isolator 6, ein anderer Körper oder eine Kombination daraus sein. Die Übertragungskörper 5 erfüllen zudem die Aufgabe, das Messelement 3 mit den beidseitigen Elektroden 4 mechanisch zu schützen.

In einer bevorzugten Ausführung ist mindestens der vordere Übertragungskörper 5 hinter dem Glühstift 20 auch ein thermischer Isolator. Dies hat den Vorteil, dass das dahinter angebrachte Bauteil 2 einer tieferen Temperatur ausgesetzt ist und somit geringeren Anforderungen genügen muss.

Diese Komponenten Messelement 3, Elektroden 4 und Übertragungskörper 5 werden von einem äusseren, dünnen, isolierenden Film 7 in zentrierter Lage zusammengehalten. Dazu weisen diese Komponenten vorzugsweise im Wesentlichen identische Aussendurchmesser auf. Dieser Film 7 muss insbesondere dafür sorgen, dass die genannten Komponenten 3, 4 und 5 solange nicht verschoben werden, bis das Bauteil 2 in einer Glühkerze 1 oder in einem anderen Sensor eingebaut ist. Zu diesem Zeitpunkt wird das Bauteil 2 unter Vorspannung gebracht, welche eine spätere Verschiebung dieser Komponenten ausschliesst. Nach dem Einbau in eine Glühkerze 1 oder in einen Sensor ist der isolierende Film 7 nur noch für die Isolation verantwortlich.

Das Bauteil 2 ist, bis es zu einem Sensor verbaut wird, in nicht oder unwesentlich vorgespanntem Zustand. Eine geringe Vorspannung von höchstens 5 N/mm² kann allerdings beim Anbringen des isolierenden Filmes 7 zustande kommen. Bei einer druckaufnehmenden Fläche von typischerweise 10-20 mm² entspricht dies einer maximalen Gesamtbelastung von 50 bis 100 N. In den meisten Fällen wird die Gesamtbelastung aber nicht über 10 N betragen. Die Gesamtbelastung , die später beim Einbau im Sensor auf das Bauteil 2 angebracht wird, ist üblicherweise um ein Vielfaches höher, mindestens aber 200 N.

Der Film 7 besteht beispielsweise aus einem Schrumpfschlauch oder aus einer Lackierung und ist vorzugsweise nicht dicker als etwa 0.2 mm. Die Schichtdicke des Filmes 7 sollte jedenfalls weniger als 1/10, vorzugsweise weniger als 1/20 des Durchmessers des Bauteils 2 betragen. Dadurch kann das Messelement 3 eine grösst mögliche Druckaufnahmefläche aufweisen, wodurch die Empfindlichkeit nicht unnötig eingeschränkt wird. Die elektrische Isolation sollte, vorzugsweise mindestens etwa 10^13 Ohm bei 150 °C betragen. Bei der Verwendung eines Schrumpfschlauches gelten diese Daten im fertigen, geschrumpften Zustand. Dieser sollte vorzugsweise bei 200°C schrumpfen und auch bei hohen Temperaturen von etwa 150°C gut anliegen.

Diese Anordnung zeichnet sich vorwiegend durch ihre Einfachheit und der daraus folgenden kostengünstigen Herstellung aus, die automatisiert werden kann. Vor dem Anbringung des isolierenden Filmes 7 werden alle Komponenten des Bauteils 2 zentriert. Der Film 7 gewährleistet die Erhaltung der Zentrierung bis das Bauteil 2 im Sensor eingebaut und vorgespannt ist. Somit erübrigt sich der Aufwand des Zentrierens beim Einbau in die Glühkerze 1. Durch diese Anordnung ist, im Gegensatz zu anderen Bauteilen für dieselben Anwendungen, bei denen eine der Elektroden mit dem Gehäuse verbunden ist, das Bauteil 2 auch masseisoliert. Diese Masseisolation ist in vielen Ländern vorschriftgemäss notwendig für alle Bauteile in einem Automobil.

Zum Einbau in die Glühkerze 1 wird das Bauteil 2 über den Stift 9 gebracht. Beidseitig des Bauteiles 2 muss ein elektrischer Isolator 6 angebracht sein. Dieser kann einseitig oder beidseitig bereits im Bauteil 2 oder an den angrenzenden Komponenten, beispielsweise in der Kraftübertragungshülse 21 und/oder an die Fixierung 22, integriert sein. Alternativ dazu kann er auch als zusätzliche Komponente auf den Stift 9 aufgereiht werden. In diesem Fall kann er, wie die anderen Komponenten des Bauteiles 2, mit dem isolierenden Film 7 befestigt sein. Es können auch zwei Isolatoren 6 beidseitig ausserhalb beider Übertragungskörper 5 durch den isolierenden Film 7 verbunden sein.

Vorteilhafterweise ist das Bauteil 2 im vorderen Bereich der Glühkerze 1 angeordnet, welcher sich im eingebauten Zustand im Bereich der Glühkerzenbohrung des Zylinderkopfes befindet. Demnach ist das Bauteil 2 vorzugsweise vor oder im Bereich des Gewindes 27 angeordnet. Dadurch ist einerseits gewährleistet, dass dieses nicht über 220 °C warm wird, da der Zylinderkopf gekühlt ist. Ein weiterer Vorteil dieser Einbaulage besteht darin, dass der Messfehler geringer ist, je näher das Bauteil 2 an der Druckkammer, also am Brennraum ist.

Ein weiterer Vorteil der vorderen Einbaulage des Bauteiles 2 besteht darin, dass dadurch im hinteren Bereich des Glühstiftes, beispielsweise im Bereich des Verbindungselementes 23, Platz für einen integrierten Verstärker ist. Dadurch kann ein bereits verstärktes Ausgangssignal durch die Verkabelung 26 weitergeleitet werden.

Der Einbau des Bauteiles 2 im vorderen Bereich setzt allerdings voraus, dass das Bauteil 2 einen Aussendurchmesser von höchstens 6 mm, vorzugsweise höchstens 5 mm aufweist, um in einer Glühkerze 1 mit einem M8 Gewinde 27 Platz zu finden. Die Länge des Bauteiles ist typischerweise zwischen etwa 6 und 15 mm.

An den Kontaktstellen 8, welche inwändig der Elektroden herausragen, können isolierte oder nicht isolierte Leitungen 10 angebracht sein. Diese führen in einer dafür vorgesehenen Rille des Stiftes 9 in den hinteren Bereich der Glühkerze 1 und werden dort entweder mit dem integrierten Verstärker oder mit der Verkabelung 26 angeschlossen. Andererseits kann der Stift 9 zwei integrierte Leitungen 10 aufweisen, welche mit den Kontaktstellen 8 beim Einbau in die Glühkerze 1 verbunden werden, beispielsweise durch Schweissen oder Löten.

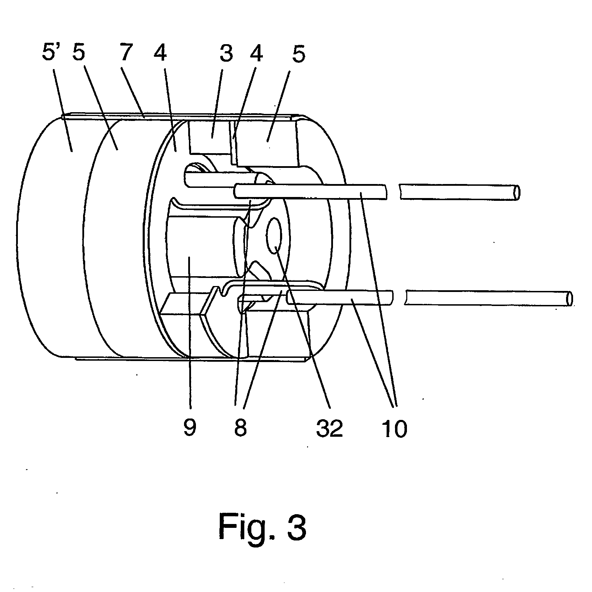

Beispiele für alternative Ausführungsformen für Anwendungen in einer Glühkerze sind in der Fig. 3 beschrieben. Es ist denkbar, dass der Stift 9 nicht in der Glühkerze eingesetzt wird. Dadurch liegt der Glühstromdraht 31 frei. Um diesem eine Führung zu geben und zugleich einen Kontakt vom Glühstromdraht 31 zu den Leitungen 10 zu vermeiden, kann das Bauteil 2 über einen Führungsstift 9' verfügen. Dieser kann eine weitere Komponente des Bauteils 2 sein oder an einer der genannten Komponenten des Bauteils 2, beispielsweise an einem der Übertragungskörper 5 oder an einem.. weiteren Übertragungskörper 5', angebracht sein oder einstückig damit verbunden sein. Der Übertragungskörper 5' kann einzelne oder mehrere der genannten mögliche Eigenschaften des Übergangskörpers 5 aufweisen.

Dieser Führungsstift 9' kann insbesondere als Scheibe ausgestaltet sein mit den entsprechenden, vorzugsweise drei, Durchgängen 32 oder/und Aussparungen für den Glühstromdraht 31 und für die beiden Leitungen 10. Andererseits kann dieser Führungsstift 9' auch als Stift ausgestaltet sein und sich etwa über die Länge des Bauteils 2 erstrecken oder gar über diese herausragen. Diese Führung hat insbesondere die Funktion, die Leitungen 10 thermisch und elektrisch vom Glühstromdraht 31 zu isolieren, wodurch die Leitungen 10 nicht mehr unbedingt isoliert sein müssen. In einer weiteren Ausführungsform ist der Führungsstift 9' so lang wie die Komponente, an der sie angebracht oder mit der sie einstückig verbunden ist.

Der Vorteil eines derartigen erfindungsgemässen Bauteils (2) liegt darin, dass das Bauteil als Einheit zusammen gehalten wird, ohne dass der Durchmesser des Messelements 3 wesentlich kleiner sein muss als wenn die benötigten Komponenten einzeln in den Sensor eingebaut werden. Zudem ist keine weitere Zentrierung der Komponenten während dem Einbau in den Sensor mehr notwendig.

Solche Bauteile 2 lassen sich auch in anderen Sensoren, beispielsweise in Kraftsensoren, einbauen. Die Verwendung solcher Bauteile 2 hat insbesondere den Vorteil, dass beim Einbau keine besondere Vorsicht gewahrt werden muss, um einen Kurzschluss zu vermeiden, da das Bauteil aussen elektrisch isoliert ist. Für solche Zwecke können insbesondere auch scheibenförmige Messelemente 3 verwendet werden, wenn mittig nichts durchgeführt werden muss. Leitungen 10 von den beiden Elektroden 4 können alternativ zur beschriebenen Anordnung beidseitig des Messelements 3 aus dem Bauteil geführt werden. Von grossen Vorteil sind aber die automatisierte Herstellung des Bauteils sowie die Möglichkeit zum automatisierten Einbau in einen Sensor, wodurch die Herstellung in grossen Stückzahlen zu moderaten Preisen ermöglicht wird.

### Bezugszeichenliste

- 1: Glühkerze
- 2: Bauteil
- 3: Messelement
- 4: Elektrode
- 5: 5' Übertragungskörper
- 6: Isolator
- 7: Isolierender Film
- 8: Kontaktstelle
- 9: Stift; 9' Führungsstift
- 10: Leitung
- 20: Glühstift
- 21: Kraftübertragungshülse
- 22: Fixierung
- 23: Verbindungselement
- 24: Gehäuse
- 25: Absatz
- 26: Verkabelung
- 27: Gewinde
- 28: Sechskant
- 29: Membran
- 30: Schweissstelle
- 31: Glühstromdraht
- 32: Zentrale Führung

## Patentansprüche

1. Bauteil (2) zum Einbau in Kraft- oder Drucksensoren umfassend ein scheibenförmiges oder lochscheibenförmiges Messelement (3) aus piezoelektrischem Material, beidseitig des Messelements anliegende lochscheibenförmige oder scheibenförmige Elektroden (4) mit Kontaktstellen (8) für den Kontakt zu Leitungen (10), sowie jeweils einen oder mehrere, beidseitig ausserhalb der Elektroden angeordnete Übertragungskörper (5, 5'), **dadurch gekennzeichnet, dass** alle diese Komponenten (3, 4, 5, 5') von einem äusseren, elektrisch isolierenden Film (7) mechanisch zusammengehalten werden.

2. Bauteil gemäss Anspruch 1, **dadurch gekennzeichnet, dass** die Übertragungskörper (5, 5') lochscheibenförmig oder scheibenförmig ausgestaltet sind und dass das Messelement (3), die Elektroden (4) sowie die Übertragungskörper (5, 5') im Wesentlichen identische Aussendurchmesser aufweisen.

3. Bauteil gemäss Anspruch 1 oder 2, **dadurch gekennzeichnet, dass** eineroder beide der Übertragungskörper (5) mit ihren benachbarten Elektroden (4) einteilig ausgestaltet sind.

4. Bauteil gemäss einem der vorhergehenden Ansprüche, **dadurch gekennzeichnet, dass** mindestens einer der Übertragungskörper (5, 5') einen Expansionskörper umfasst.

5. Bauteil gemäss einem der vorhergehenden Ansprüche, **dadurch gekennzeichnet, dass** mindestens einer der Übertragungskörper (5, 5') einen elektrischen Isolator (6) umfasst.

6. Bauteil gemäss einem der vorhergehenden Ansprüche, **dadurch gekennzeichnet, dass** mindestens einer der Übertragungskörper (5, 5') aus wärmeisolierendem Material besteht.

7. Bauteil gemäss einem der vorhergehenden Ansprüche, **dadurch gekennzeichnet, dass** sich die Kontaktstellen (8) im Innern des Bauteils befinden.

8. Bauteil gemäss einem der vorhergehenden Ansprüche, **gekennzeichnet durch** mindestens eine, vorzugsweise zwei isolierte oder nicht isolierte Leitungen (10), welche an den Kontaktstellen (8) angebracht sind.

9. Bauteil gemäss einem der vorhergehenden Ansprüche, **gekennzeichnet durch** einen mittig angeordneten Stift (9).

10. Bauteil gemäss Anspruch 9, **dadurch gekennzeichnet, dass** der Stift (9) eine zentrale Führung (32) aufweist.

11. Bauteil gemäss Anspruch 9 oder 10, **dadurch gekennzeichnet, dass** der Stift (9) an einem der Übertragungskörper (5, 5') angebracht oder mit diesem einstückig verbunden ist.

12. Bauteil gemäss einem der vorhergehenden Ansprüche, **dadurch gekennzeichnet, dass** der isolierende Film (7) ein Schrumpfschlauch ist.

13. Bauteil gemäss einem der Ansprüche 1 bis 11, **dadurch gekennzeichnet, dass** der isolierende Film (7) eine Lackierung ist.

14. Bauteil gemäss einem der vorhergehenden Ansprüche, **dadurch gekennzeichnet, dass** der isolierende Film (7) eine Schichtdicke von weniger als 1/10, vorzugsweise weniger als 1/20 des Durchmessers des Bauteils (2) aufweist.

15. Bauteil gemäss einem der vorhergehenden Ansprüche, **dadurch gekennzeichnet, dass** der isolierende Film (7) eine elektrische Isolation von mindestens 10^13 Ohm bei 150°C hat.

16. Bauteil gemäss einem der vorhergehenden Ansprüche, **dadurch gekennzeichnet, dass** das Bauteil in nicht eingebautem Zustand derart vorgespannt wird, dass es nicht oder mit weniger als 100N, vorzugsweise mit weniger als 10 N Gesamtbelastung beaufschlagt ist.

17. Bauteil gemäss einem der vorhergehenden Ansprüche, **gekennzeichnet durch** einen Gesamtdurchmesser von kleiner als 6 mm.

18. Bauteil gemäss einem der vorhergehenden Ansprüche, **dadurch gekennzeichnet, dass** der Stift (9) eine Rille umfasst zum Führen der isolierten oder nicht isolierten Leitungen (10).

19. Sensor umfassend ein Bauteil (2) gemäss einem der vorhergehenden Ansprüche zum Messen von Kräften oder Drücken.

20. Sensor gemäss Anspruch 19, **dadurch gekennzeichnet, dass** der Sensor als Glühkerze (1) ausgebildet ist umfassend einen Glühstift (20), einen Glühstromdraht (31) und ein Gewinde (27).

21. Sensor gemäss Anspruch 20, **dadurch gekennzeichnet, dass** das Bauteil (2) im vorderen Bereich der Glühkerze, zwischen dem Glühstift (20) und dem Gewinde (27), angeordnet ist.

22. Sensor nach Anspruch 20, **dadurch gekennzeichnet, dass** der Glühstromdraht (31) mittig durch das Bauteil (2) verläuft.

23. Sensor nach Anspruch 20, **dadurch gekennzeichnet, dass** sich hinter dem Bauteil (2) eine Fixierung (22) befindet.

24. Sensor nach Anspruch 23, **dadurch gekennzeichnet, dass** die Fixierung (22) mittels einer Schweissstelle (30) an einem Gahause (24) angebracht ist.

25. Sensor nach Anspruch 23, **dadurch gekennzeichnet, dass** die Fixierung (22) mittels einer Schweissstelle (30) an einer von einem Gehäuse (24) getrennten angeordneten Zwischenhülse angebracht ist.

26. Sensor nach einem der Ansprüche 20 bis 25, **dadurch gekennzeichnet, dass** das Bauteil (2) mittels einer Membran (29), welche das Innere des Gehäuses (24) abdichtet, unter einer Vorspannung steht.

27. Sensor gemäss Anspruch 20, **dadurch gekennzeichnet, dass** der Stift (9) zwei integrierte Leitungen (10) aufweist, welche mit den Kontaktstellen (8) verbunden sind.

## Claims

1. A component (2) for installation in force or pressure sensors comprising a disc-shaped or perforated disc-shaped measuring element (3) made of piezoelectric material, adjacent perforated disc-shaped or disc-shaped electrodes (4) with connecting points (8) for contacting lines (10) on both sides of the measuring element as well as one or more transmission bodies (5, 5') arranged on both sides external to the electrodes **characterized in that** all these components (3, 4, 5, 5') are held together mechanically by an external electrically insulating film (7).

2. The component according to claim 1 **characterized in that** the transmission bodies (5, 5') are perforated disc-shaped or disc-shaped and that the measuring element (3), the electrodes (4), and the transmission bodies (5, 5') substantially have an identical outer diameter.

3. The component according to claim 1 or 2 **characterized in that** one or both of the transmission bodies (5) are integral with their adjacent electrodes (4).

4. The component according to any of the preceding claims **characterized in that** at least one of the transmission bodies (5, 5') comprises an expansion body.

5. The component according to any of the preceding claims **characterized in that** at least one of the transmission bodies (5, 5') comprises an electrical insulator (6).

6. The component according to any of the preceding claims **characterized in that** at least one of the transmission bodies (5, 5') is made of a heat insulating material.

7. The component according to any of the preceding claims **characterized in that** the connecting points (8) are located in the interior of the component.

8. The component according to any of the preceding claims **characterized by** at least one, preferably two, insulated or non-insulated wires (10) that are connected at the connecting points (8).

9. The component according to any of the preceding claims **characterized by** a centrally arranged pin (9).

10. The component according to claim 9 **characterized in that** the pin (9) has a central guide element (32).

11. The component according to claim 9 or 10 **characterized in that** the pin (9) is attached to one of the transmission bodies (5, 5') or integrally connected therewith.

12. The component according to any of the preceding claims **characterized in that** the insulating film (7) is a shrink sleeve.

13. The component according to any of claims 1 to 11 **characterized in that** the insulating film (7) is a varnish coating.

14. The component according to any of the preceding claims **characterized in that** the insulating film (7) has a layer thickness of less than 1/10, preferably less than 1/20 of the diameter of the component (2).

15. The component according to any of the preceding claims **characterized in that** the insulating film (7) has an electrical insulation of at least 10^¹³ Ohm at 150°.

16. The component according to any of the preceding claims **characterized in that** said component in a non-installed state is preloaded in a way that it is not preloaded or subjected to a load of less than 100 N, preferably less than 10 N.

17. The component according to any of the preceding claims **characterized by** an overall diameter of less than 6 mm.

18. The component according to any of claims 9 to 11 **characterized in that** the pin (9) comprises a groove for guiding the insulated or non-insulated leads (10).

19. A sensor comprising a component (2) according to any of the preceding claims for measuring forces or pressures.

20. A sensor according to claim 19 **characterized in that** the sensor is embodied by a glow plug (1) comprising a glow pin (20), a glow current wire (31), and a thread (27).

21. The sensor according to claim 20 **characterized in that** the component (2) is disposed in the front area of the glow plug between the glow pin (20) and the thread (27).

22. The sensor according to claim 20 **characterized in that** the glow current wire (31) extends centrally through the component (2).

23. The sensor according to claim 20 **characterized in that** a fastening means (22) is arranged after the component (2).

24. The sensor according to claim 23 **characterized in that** the fastening means (22) is attached to a housing (24) by means of at least one welding site (30).

25. The sensor according to claim 23 **characterized in that** the fastening means (22) by at least one welding site (30) is attached to an intermediate sleeve arranged separately from a housing (24).

26. The sensor according to any of claims 20 to 25 **characterized in that** the component (2) is preloaded by means of a membrane (29) sealing the interior of the housing (24).

27. The sensor according to claim 20 **characterized in that** the pin (9) has two integrated leads (10) connected with the connecting sites (8).

## Revendications

1. Un composant (2) pour le montage dans des capteurs de force ou de pression comprenant un élément de mesure (3) en forme de disque ou de disque perforé constituée d'un matériau piézoélectrique, des deux côtés du élément de mesure des électrodes adjacentes en forme de disque ou de disque perforé (4) avec des points de raccordement (8) pour venir en contact avec des lignes (10) ainsi qu'un ou plusieurs corps de transmission (5, 5') arrangés des deux côtés à l'extérieur des électrodes **caractérisé en ce que** tous ces éléments (3, 4, 5, 5') sont retenues mécaniquement par un film externe électriquement isolant (7).

2. Le composant selon la revendication 1 **caractérisé en ce que** les corps de transmission (5, 5') sont en forme de disque perforé ou de disque et **en ce que** l'élément de mesure (3), les électrodes (4) et les corps de transmission (5, 5') sont d'un diamètre extérieur substantiellement identique.

3. Le composant selon la revendication 1 ou 2 **caractérisé en ce qu'**un ou les deux des corps de transmission (5) sont solidaires de leurs électrodes adjacentes (4).

4. Le composant selon l'une quelconque des revendications précédentes **caractérisé en ce qu'**au moins un des corps de transmission (5, 5') comprend un corps de expansion.

5. Le composant selon l'une quelconque des revendications précédentes **caractérisé en ce qu'**au moins un des corps de transmission (5, 5') comprend un isolant électrique (6).

6. Le composant selon l'une quelconque des revendications précédentes **caractérisé en ce qu'**au moins un des corps de transmission (5, 5') est fabriqué d'un matériau d'isolation thermique.

7. Le composant selon l'une quelconque des revendications précédentes **caractérisé en ce que** lesdits points de raccordement (8) se trouvent à l'intérieur du composant.

8. Le composant selon l'une quelconque des revendications précédentes caractérisé en au moins une, préférentiellement deux lignes isolées ou non (10) raccordées aux points de raccordement (8).

9. Le composant selon l'une quelconque des revendications précédentes caractérisé en un goujon (9) positionné au centre.

10. Le composant selon la revendication 9 **caractérisé en ce que** le goujon (9) possède un élément de guidage central (32).

11. Le composant selon la revendication 9 ou 10 **caractérisé en ce que** le goujon (9) est rattachée à l'un des corps de transmission (5, 5') ou solidairement reliée avec celui-ci.

12. Le composant selon l'une quelconque des revendications précédentes **caractérisé en ce que** ledit film isolant (7) est une gaine rétractable.

13. Le composant selon l'une quelconque des revendications 1 à 11 **caractérisé en ce que** ledit film isolant (7) est un vernis.

14. Le composant selon l'une quelconque des revendications précédentes **caractérisé en ce que** ledit film isolant (7) présente une épaisseur de couche inférieure à 1/10, de préférence inférieure à 1/20 du diamètre du composant (2).

15. Le composant selon l'une quelconque des revendications précédentes **caractérisé en ce que** ledit film isolant (7) possède un isolement électrique d'au moins 10^¹³ Ohm à 150°.

16. Le composant selon l'une quelconque des revendications précédentes **caractérisé en ce que** ledit composant dans l'état non-installé est précontraint de manière à n'être pas précontraint ou d'être soumis à une charge inférieure à 100 N, préférentiellement inférieure à 10 N.

17. Le composant selon l'une quelconque des revendications précédentes caractérisé en un diamètre hors tout inférieure à 6 mm.

18. Le composant selon l'une quelconque des revendications 9 à 11 **caractérisé en ce que** le goujon (9) comprend une rainure pour la guidage desdites lignes isolées ou non (10).

19. Un capteur comprenant un composant (2) selon l'une quelconque des revendications précédentes pour la mesure des forces ou des pressions.

20. Le capteur selon la revendication 19 **caractérisé en ce que** ledit capteur est formé par une bougie de préchauffage (1) comprenant une goupille d'incandescence (20), un fil incandescent (31) et un filetage (27).

21. Le capteur selon la revendication 20 **caractérisé en ce que** ledit composant (2) est positionné dans la zone avant de la bougie de préchauffage entre la goupille d'incandescence (20) et le filetage (27).

22. Le capteur selon la revendication 20 **caractérisé en ce que** le fil incandescent (31) traverse de façon centrale le composant (2).

23. Le capteur selon la revendication 20 **caractérisé en ce qu'**un moyen de fixation (22) est disposé derrière le composant (2).

24. Le capteur selon la revendication 23 **caractérisé en ce que** ledit moyen de fixation (22) est rattaché à un boîtier (24) à l'aide d'au moins un site de soudure (30).

25. Le capteur selon la revendication 23 **caractérisé en ce que** ledit moyen de fixation (22) par au moins un site de soudure (30) est rattaché à un manchon intermédiaire disposé séparément d'un boîtier (24).

26. Le capteur selon l'une quelconque des revendications 20 à 25 **caractérisé en ce que** ledit composant (2) est précontraint à l'aide d'une membrane (29) assurant l'étanchéité de l'intérieur du boîtier (24).

27. Le capteur selon la revendication 20 **caractérisé en ce que** le goujon (9) possède deux lignes intégrées (10) raccordées aux sites de reccordement (8).
